# EUROPEAN PATENT APPLICATION

(11) **EP 3 246 293 A1**
(43) Date of publication of application: **22.11.2017**
(21) Application number: 16001111.0
(22) Date of filing: 16.05.2016
(51) Int. Cl.: C02F 11/00

(54) **A PLANT FOR THE TREATMENT OF SLUDGE, IN PARTICULAR FOR MAKING INERT SLUDGE OF ORGANIC ORIGIN**

(71) Applicant: Sami S.r.l., 52011 Bibbiena (AR) (IT)
(72) Inventor: Innocenti, Mauro, 52011 Bibbiena (AR) (IT); Innocenti, Franco, 52011 Bibbiena (AR) (IT)
(74) Representative: Olivieri, Antonella

(57) **Abstract**

Plant for the treatment of sludge, in particular for making inert sludge of organic origin and a process for making inert sludge.

The plant according to the invention is characterized in that it comprises, on a frame, at least one container for the storage of sludge to be treated, having on its bottom rasp bars for the cutting and extraction of a portion of sledge to be treated and its transportation, along a line of movement, towards a respective at least one motorized crushing cochlea. Said cochlea is interconnected to the container and positioned before a mixer fed by at least one dosing device of additive materials for the treatment.

The plant further comprising means for weighing the quantity of sludge to be treated.

## Description

The present invention relates to a plant for the treatment of sludge, in particular for making inert sludge of organic origin and a process for making inert sludge.

Recently it is raised the problem of making inert sludge of organic origin. In the past, when the ecological problem was not strongly felt, and when the damages to the environment were undervalued and their effects on the persons were unknown, the human and animal waste material was discharged into water basins.

The awareness that pollution of aquifers, and the potential damage that bacterial loads of this magnitude can cause causes serious problems to human health, in addition to involving ethical issues, also imply serious social and economic consequences, has led governments and administrations to reclamation and remediation interventions of polluted lakes and marshes.

The sludge of organic origin that is extracted from the backdrop is in semi-liquid form and requires special treatment before being disposed of.

In practice, it must first be decanted and partially dehydrated and then made inert with concrete and ash dosed appropriately.

In particular, this sludge, which is in thickened, low viscosity, and sticky form, is first processed by a centrifugal machine to remove part of the water, so that the sludge to be treated (to made inert) becomes cohesive in the semi-solid state.

At the current state of technology, this series of operations are manual and employ a large number of workers who, for lack of means and for convenience, are not always able to make inert the sludge effectively, due to the wrong dosage of the cements and/or ashes.

Furthermore, the use of many workers involves a hish cost for the administration as well as a waste of binding and additive materials, which are over-dosed

The aim of the invention is to eliminate the drawbacks described above by providing a plant for the treatment of sludge, in particular for making inert sludge of organic origin, which automates the remediation process to make it usable in an industrial scale.

Within the above aim, an object of the present invention is to provide a plant for the treatment of sludge, in particular for making inert sludge of organic origin, which always ensures a correct and proper dosage. Another object of the present invention is to limit the number of workers for the inertization process, reducing the maintenance costs of the plant.

Another object of the invention is to provide a plant for the treatment of sludge, in particular for making inert sludge of organic origin, by using readily commercially available means and commonly used materials, so that the plant is economically competitive.

This aim along with these other objects, which will become more apparent hereinafter, are achieved by a plant for the treatment of sludge, in particular for making inert sludge of organic origin, according to the invention, characterized in that it comprises, on a frame, at least one container for the storage of sludge to be treated, having on its bottom rasp bars for the cutting and the extraction of a portion of sludge to be treated and its transportation, along a line of movement, towards a respective at least one motorized crushing cochlea, interconnected to said at least one container and positioned before a mixer fed by at least one dosing device of additive materials for treatment, said system further comprising means for weighing the quantity of sludge to be treated

Further features and advantages of the invention will be more apparent from the description of a preferred but not exclusive embodiment of the plant for the treatment of sludge, in particular for making inert sludge of organic origin, illustrated by way of non-limiting example with the aid of the accompanying drawings, wherein:
Figure 1 represents the plant for the treatment of sludge of organic origin, according to the invention, in elevation;
Figure 2 schematically illustrates a part of the plant of Figure 1, relative to the part with the hopper 2;
Figure 3 is a part of the plant of Figure 1 relative to the two hoppers 2 and 2', in elevation;
Figure 4 schematically illustrates the two dosing devices 7 and 8 of additive material, in elevation.

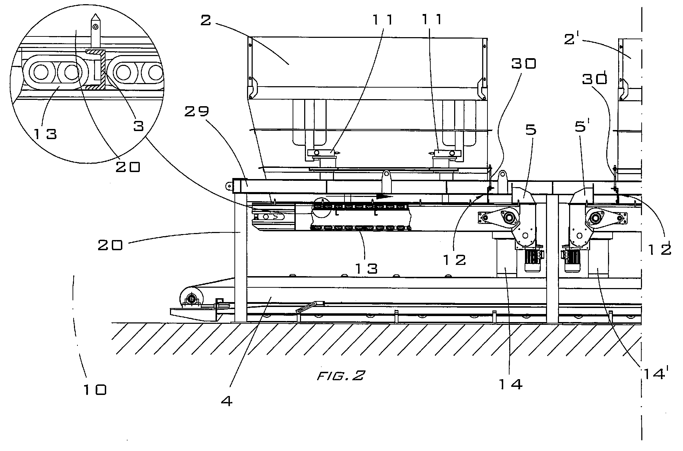

With reference to the above figures, a fundamental characteristic of the plant for the treatment of sludge, in particular for making inert sludge of organic origin, according to the invention, which is identified as a whole with reference numeral 1, is given by comprising, on a frame 20, at least one container 2 (and/or 2') for the storage of sludge to be treated, having on its bottom rasp bars 3 (and/or 3') for the cutting and extraction a portion of sludge to be treated and its transportation, along a line of movement 10, towards a respective at least one motorized crushing cochlea 5 (and/or 5') The cochlea 5 (and/or 5') is motorized, interconnected to the container 2 (and/or 2') by means of a corresponding outlet 12 (and/or 12'), and positioned before a mixer 6 fed from at least a dosing device 7 (and 8) of additive and/or binding materials for the treatment: in the case of making sludge of organic origin, the additives are concrete and ash. Means for weighing the quantity of sludge to be treated are also provided, such as for example of the first load cells 11, known per se, interposed between the container 2 and the frame 20 (Fig. 2).

Obviously, when there are two containers 2 and 2', similar load cells will be interposed between the container 2' and the frame 20.

It is provided a conveyor belt 4, below the container 2 (and/or 2'), which develops along the line of movement 10, that has the task of conveying the sludge to be treated from the container 2 (and/or 2') to the mixer 6: in the cochlea 5 (and/or 5'), the sludge is comminuted into sufficiently small parts, which are redirect to the central area of the cochlea 5 (and/or 5') itself, so that, by falling by gravity into the belt 4, are transported to the entry of the mixer 6.

Advantageously, two containers 2 and 2' are provided, consisting of two hoppers in succession along the line of movement 10: a first hopper 2 interconnected to a respective first cochlea 5 and a second hopper 2' in turn interconnected to a respective second cochlea 5'.

In the embodiment described here, the two hoppers 2 and 2' are positioned in such a way that the respective outlets 12 and 12' are faced one against the other, but this does not exclude that they can also be arranged differently.

The two hoppers 2 and 2' are preferably sheathed with a synthetic material suitable for contact with an organic material, such as polyurethane.

Likewise, also the sliding base of the bars 3 e 3' can be coated with a synthetic material, of each of the hoppers 2 and 2'.

Each hopper 2 and 2' is equipped with load cells 11 (the load cells of the hopper 2' are not shown) interposed between the relative same hopper and the frame 20, obviously independent of one another.

Furthermore, to allow a better sliding of the sludge, the walls of the hoppers 2 and 2' have a strong inclination so that they are substantially normal with respect to the ground

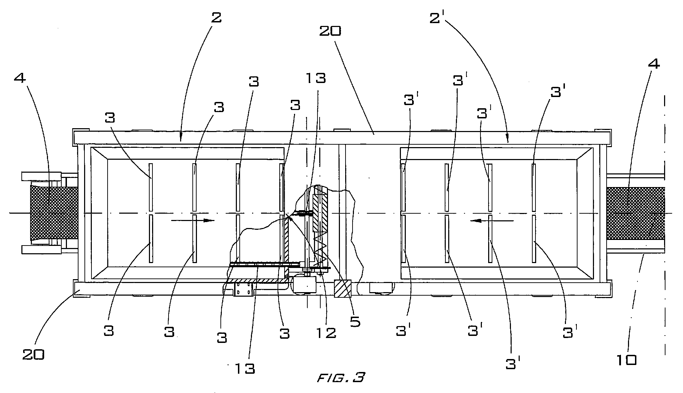

With reference to Figure 3, each of the two hoppers 2 and 2' has a series of rasp bars 3 and 3' respectively acting on the bottom of the first and second hopper 2 and 2'. The bars 3 and 3' are driven by transmission means, such as chains 13 and 13' (but also belts, toothed bars, etc.), each slave with its own motor 14 and 14' integral with the frame 20 which, by rotating in the opposite direction (see arrow in figure 2), allow the extraction and the thrust of more portions of sludge to be treated towards the outlets 12 and 12'.

The motors 14 and 14', as well as the crushing cochleas 5 and 5' are controlled by an inverter so that, by varying their speed, one can control the amount (speed of the extraction engines 14 and 14') and the quality (speed of rotation of the cochleas 5 and 5') of the extracted sludge, since it is known that increasing the crushing of the sludge, and so the contact surface with the additives, the inertization will be better.

Preferably, the dosing device 7 (and/or 8) is connected to a storage warehouse of additives for the treatment of sludge, for example two vertical silos respectively containing concrete and ash (7' and 8'), by means of oblique cochleas with a flow rate appropriate to the amount of additive to be dosed

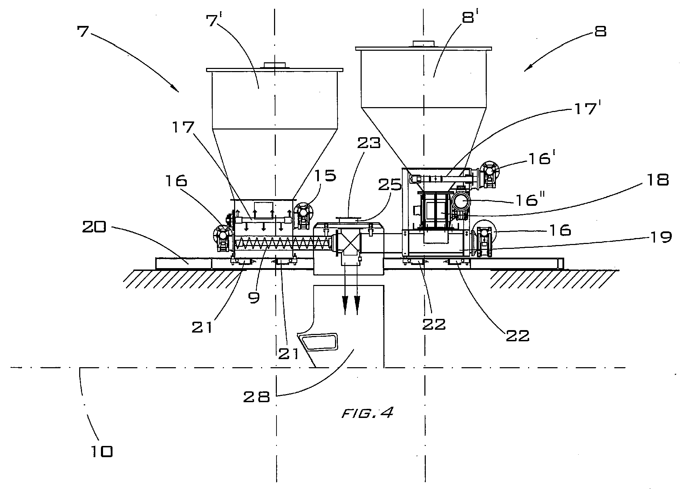

In the embodiment presented here, two dosing devices are provided: a concrete doser 7 and an ash doser 8, each of them connected in output with at least one respective cochlea (9 and 19) so as to maintain substantially constant the falling material towards the mixer 6 and indicated by the arrows of figure 4.

In this embodiment, to facilitate the feeding of the mixer 6, both dosing devices 7 and 8 are arranged above the mixer 6, as shown in figure 4, so that the additive material is received inside the mixer 6 by gravitational fall

The dosing device 7 has a first reel 17, positioned below of a first silo 7', which develops in a direction substantially parallel with respect to the line of movement 10, to maintain fluid the concrete and a respective dosing cochlea 9, downstream of the reel 17, which prevents the formation of blocks and bridges that would otherwise impair the correct extraction of additives and/or binders. This cochlea 9 prevents for example that, if the additive material is packed, a control system for the failure of the fall of the material blocks the system.

The dosing device 8, instead, has a rotary valve 18 which has drawers which are filled and subsequently emptied by rotation. The rotary valve 18 is interposed, along an axis substantially normal with respect to the line of movement 10, between a second reel 17', which develops in a direction substantially parallel with respect to the line 10 and which is placed at the bottom of a second silo 8', and a cochlea conveyor 19 for the ash to the mixer 6; the cochlea 19 extends also in a substantially parallel direction with respect to the line 10.

The reel 17' has ploughshares, whose continuous rotation ensures perfect filling of the drawers of the rotary valve maintaining fluid the falling ashes and avoiding the formation of bridges. The cochlea 19 has a screw spiral and re-rakes the suitably dosed ash, which falls into the chamber located below the rotary valve 18 and drags it in the direction normal to the line 10 up to the falling point within the mixer 6. The rotary valve 18 defines essentially two falling portions of the ash towards the dosing cochlea 9: the distance between the reel 17' and the rotary valve 18 itself and the distance between the same rotary valve 18 and the cochlea 19, which re-takes the ashes falling from the rotary valve 18. In this way, also the falling flow of the ash, that is much more volatile as compared to the concrete, is maintained substantially constant both in the first portion (thanks to the reel 17') and in the second portion, out of the rotary valve 18 (by the action of the cochlea 18).

Also the cochlea conveyors 9 and 19, the reels 17 and 17', as well as the rotary valve 18 of the dosing devices 7 and 8, have a respective motor 16, 16', 15, 15' and 16" provided with inverters in a manner such that they can be employed with a volumetric operation and/or by weighing: by correlating the speed of the motor to the flow rate of the respective dosing devices, it is possible to control and vary the dose of additive materials or of the binders according to the quantity of sludge extracted and pushed by the bars 3 and 3'.

Obviously, the various ash flow rates requested are obtained by varying the speed of rotation of the rotary valve 18 by the inverter.

Moreover, it can be provided for an additional hopper 28 for the additive input from the dosing units 7 and 8, interposed between the dosing cochlea 9 and the mixer 6.

Second load cells 21 (and 22) can be provided, which are also known per se, interposed between the dosing device 7 (and 8) and the frame 20 so as to record the amount of consumed additives (in this case concrete and ash), and then to comply the mixture composition in the mixer 6 (fig.).

Preferably, the system comprises a data processor 27, which loads a program for dosing the amount of additives to be introduced into the mixer based on the amount of the extracted sludge.

This program may also advantageously take into account the degree of humidity in the sludge into the hoppers 2 and 2'.

This program can also control the charging of additive materials (and/or binders) contained within the dosing devices 7 and 8.

The sludge contained in the hoppers are in fact partially dehydrated, however, to detect the hygroscopic degree of the sludge to be treated, in order to exactly calculate the quantity of additives required to be input into the mixer 6, sensor means may be provided, which are interconnected with the data processor 27 to detect the degree of humidity of the sludge, such as for example one or more probes (not shown here) mounted on the inner walls of the hoppers 2 and 2'.

The processor 27 may have at least a memory cell for recording the data from the load cells (11, 21 and 22).

In addition, the data processor 27 is preferably interconnected with the inverters of the motor means of the plant for varying the flow rates of sludge and additives, as well as changing the degree of crushing of the portions of sludge to be treated in cochleas 5 and/or 5'.

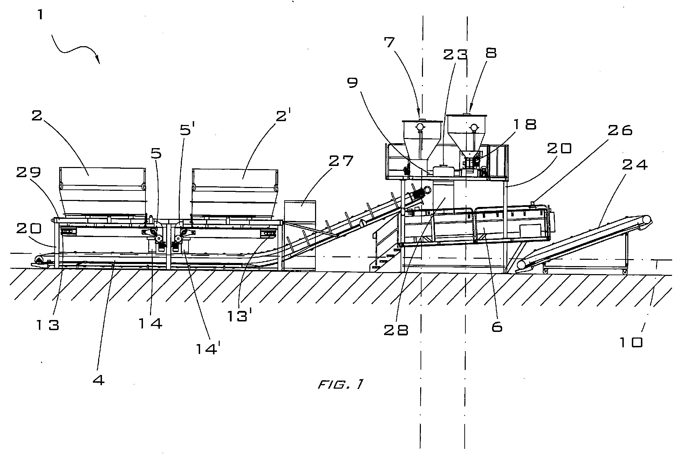

Preferably, the mixer 6, which in this case is a double-shaft mixer with two substantially parallel axes, has sampling points for harmful or dangerous gases, such as ammonia, which develop during the mixing of sludge with additives, connected to a filtration system (not shown here). In Figures 1 and 4, two ammonia sampling points are shown: the first suction unit 23 is positioned above the hood 25 arranged at the point of introduction of additives (Fig. 4), while the second suction unit 26 is arranged in the terminal part of the mixer 6 (fig. 1).

Finally, the frame 20 can have a cross-member 29 adjustable in height by means of the brackets 30 and 30' along a direction substantially normal to the ground, so as to allow a variation of the distance between the plane of the hoppers 2 and 2' and the plane defined by the bars 3 and 3'.

The process for making inert sludges, in particular sludges of organic origin, has the characteristic that it comprises a succession of steps that consist in:
- loading at least a container 2 (and/or 2') for the storage of the partially dried sludge to be treated,
- cutting and extracting successive portions of sludge to be treated contained in the container 2 (and/or 2') by means of rasp bars 3 (and/or 3') acting on the bottom of the container 2 (and/or 2'),

- crushing the extracted portions of sludge to be treated, in order to obtain crushed material to be treated, to ensure a more effective reaction with the additive materials (in this case, concrete and ash), and therefore a better inertization; the crushing is accomplished by a cochlea 5 (and/or 5'), motorized, interposed between the container 2 (and/or 2') and a mixer (6),
- transporting the crushed material to be treated along a line of movement (10), to enter it into a mixer (6) fed by the additive materials, by means of at least one dosing device 7 (and 8), for making inert the crushed material to be treated,
- calculating the amount of additive materials to enter into said mixer 6 based on the weight of extracted sludge to be treated,
- inserting the (appropriately dosed) additive materials into the mixer 6 that combine them to the crushed material to be treated, forming a mixture of inert material,
- ejecting the inert material

The inert material from the mixer chosen for the system described here is finely shredded and, falling on a second conveyor belt 24 below the outlet of the mixer 6, is moved away towards the storage area.

Advantageously, the sludge to be treated, extracted from the container 2 (and/or 2'), is weighed retrospectively, that is to say by the difference between the gross, i.e. total, weight of the container 2 (and/or 2') before and after the extraction, so that a suitably designed program, also according to the degree of humidity of the sludge to be treated detected by suitable sensor means, calculates the amount of each of the additive materials (in this case, concrete and ash) to be introduced into the mixer 6, necessary to the make inert the crushed material to be treated Advantageously, the additive materials to be introduced into the mixer 6 retrospectively are determined by the difference between the gross total weight of the dosing device 7 (and 8) before and after the discharge of the additives themselves, so as to record the amount of concrete and ash consumed during the inertization, and to verify that the inerting mixture composition is adhered to and that a mixture of inert material from the mixing of suitably dosed organic sludge, concrete and ash is properly formed

In the present embodiment, the system comprises two hoppers in succession along the line of movement 10 for containment of the sludge to be treated: a first hopper 2 and a second hopper 2', interconnected to a first and to a second cochlea 5 and 5', respectively, for the crushing of the portions of sludge to be transported to the mixer 6. The two hoppers 2 and 2' are used in alternating sequence in such a way that as said first hopper (2) is emptied for the extraction of successive sludge portions, said second hopper (2') is filled, and vice versa, so as to obtain a continuous operation of the plant.

The mixer 6 is double-shaft mixer with two horizontal axes, and the three elements (sludge, concrete and ash) are suitably mixed therein, producing, out of the mixer itself, clods of inertized sludge that are loaded by the operator and transported to the place of accumulation.

In use, while a hopper, for example 2, is charged with sludges to be treated and previously partially dehydrated, the second hopper 2', which has just been used, is filled with other sludges to be treated for a subsequent inertization, which will begin when the sludge contained within the first hopper 2 will be exhausted

The sludge is extracted by the bars 3 in successive portions, and as the bars 3 cut and bring away a portion of the sludge one after the other towards the cochlea 5 for the crushing of the sludge itself, the level of the hopper is lowered and the weight detected by the load cells 11 (and recorded by the processor 27) changes constantly

The crushed sludges, out of the cochlea 5, fall on the belt 4 and are carried towards the mixer 6 in order make them inert by introducing in the mixer a suitable dose of additives.

The data processor 27, which in the meantime has recorded the amount of sludge that is coming into the mixer, as well as its moisture, calculates the amount of concrete and ash introduced into the mixer 6 itself by the dosing devices 7 and 8.

In the dosing devices, other appropriately positioned cochleas 17, 18 and 18' enable a continuous flow falling of the additive materials. The dosage is controlled by the processor 27, which, by means of a special program connected to load cells 21 and 22, which allow to determine the weight of additives within the dosing devices 7 and 8, dictates the quantity of additives to be introduced into the mixer, by using the amount of sludge extracted by the bars 3 and according to its degree of humidity. The control function of the processor 27 on the motor means allows the variation of the sludge flow rate and of the crushing state thereof, as well as the flow rate of the additive material

The additives falling from the dosing devices are collected by an additional hopper 28 below the dosing cochlea 9 and connected to a mouth of the mixer 6.

During the mixing operation, from the suction units 23 and 26 harmful and dangerous gases, such as ammonia, from the mixer 6 are vented and filtered

Once finished the mixing, from the mixer 6 inert clods of inertized material are output, ready to be removed by means of the belt 24 that brings these clods to an operator that charges and carries them at the place of accumulation.

From the above description, it can be observed that the invention achieves the intended aim and objects, and in particular the fact is stressed that there is provided a plant for the treatment of sludge, in particular for making inert sludge of organic origin, which is fully automatic.

In particular, thanks to the automatic and independent dosing of additives according to the flow rate of sludge to be treated, the remediation process is usable in an industrial scale

Another advantage of the invention is given by the fact that the system thus conceived always ensures a correct and proper dosage, also thanks to the many constructional expedients, such as for example the fact that the data processor also takes into account the hygrometric degree of the sludges to dose the additives, or the ability to vary the degree of crushing of the sludges before placing them in the crusher.

Moreover, thanks to the above, it avoids a waste of additive materials and/or binders.

Another advantage of the invention is the great productivity achievable by the plant, with an output up to 60 cubic meters/hr in average of treated sludge, especially thanks to the effectiveness of the rasp bars in cutting, extracting and conveying the sludge in the crushing cochleas.

In addition, another advantage of the present invention is to limit the number of workers for the inertization process, reducing the maintenance costs of the plant.

Not least, the use of means readily available commercially and the use of common materials, make the system economically competitive and suitable to be used also for other uses, such as for the remediation of silty soils.

The so-designed invention is susceptible of numerous modifications and variations, all of which fall within the scope of the inventive concept. Further, all the details will be replaced by other technically equivalent elements.

In practice, the materials employed, as well as the dimensions, may be different according to requirements, provided they are consistent with the realization purpose.

## Claims

1. A plant for the treatment of sludge, in particular for making inert sludge of organic origin, **characterized in that** it comprises, on a frame (20), at least one container (2, 2') for the storage of sludge to be treated, having on its bottom rasp bars (3, 3') for the cutting of a portion of sludge to be treated and its transportation, along a line of movement (10), towards a respective at least one motorized crushing cochlea (5, 5'), interconnected to said at least one container (2, 2') and positioned before a mixer (6) fed by at least one dosing device (7, 8) of additive materials for treatment, said system further comprising means for weighing the quantity of sludge to be treated.

2. Plant according to claim 1, **characterized in that** said at least one container (2, 2') comprises two hoppers in succession along the line of movement (10): a first hopper (2) interconnected with a respective first cochlea (5) and a second hopper (2') interconnected to a respective second cochlea (5'), said first hopper (2) and said second hopper (2') being positioned in such a way that the related outlets (12, 12') are faced one against the other.

3. Plant according to claim 2, **characterized in that** each of said two hoppers (2, 2') has a series of rasp bars (3, 3') acting on the bottom of said first hopper (2) and of said second hopper (2'), for extraction and pushing, towards said outlets (12, 12'), for more portions of sludge to be treated, each of said rasp bars (3, 3') being driven by transmission means (13, 13') of the movement, interlocked with at least one extraction engine (14, 14') integral with said frame (20).

4. Plant according to claim 1, **characterized in that** said at least one dosing device (7, 8) consists of a concrete doser (7) and an ash doser (8), each of them connected in outlet with at least one respective rotating ploughshare cochlea (17, 18, 18') so as to maintain substantially constant the flow of falling material towards a dosing cochlea (9) interposed between said at least one dosing device (7, 8) and said mixer (6).

5. Plant according to claim 5, **characterized in that** said ash doser (8) has a rotary valve (19) interposed, along an axis substantially normal with respect to the line of movement (10) between a first rotating ploughshare cochlea (18) and a second rotating ploughshare cochlea (18'), defining two lengths of the fall of the ash towards said dosing cochlea (9), in such a way that the flow of the fall of the ash in output from said rotary valve (19) is maintained substantially constant in the first length of said two lengths by the action of said first rotating ploughshare cochlea (18) and in the second length by the action of said second rotating ploughshare cochlea (18').

6. Plant according to claim 1, **characterized in that** said mixer (6) comprises extraction points sampling points (23, 26) for gas emerging from the sludge to be treated during its mixing with the additive materials, connected to a filtration system.

7. The process for making inert sludges, in particular sludges of organic origin, which comprises a succession of steps that consist in:
- loading at least a container (2, 2') for the storage of dried sludge to be treated,
- cutting and extracting successive portions of sludge to be treated contained in said at least one container (2, 2') by means of rasp bars (3, 3') acting on the bottom of said at least one container (2, 2'),
- crushing the extracted portions of sludge to be treated, in order to obtain crushed material to be treated, by means of a crushing cochlea (5, 5'), motorized, interposed between said at least one container (2, 2') and a mixer (6),
- transporting the crushed material to be treated along a line of movement (10), to enter it into a mixer (6) fed by the additive materials, by means of at least one dosing device (7, 8), for making inert the crushed material to be treated,
- calculating the amount of additive materials to enter into said mixer (6) based on the weight of extracted sludge to be treated,
- inserting the additive materials into said mixer (6) that combine those additive materials to the crushed material to be treated, forming a mixture of inert material,
- ejecting the inert material.

8. Process according to claim 7, **characterized in** weighing the extracted sludge to be treated from the said at least one container (2, 2') a posteriori by means of calculating the difference between the gross weight of said at least one container (2, 2') before and after the extraction, so as to calculate the amount of additive materials to be entered into said mixer (6) required to make inert the crushed material to be treated.

9. Process according to claim 7, **characterized in that** to determine the weight of the additive materials to be entered into said mixer (6) by means of calculating the difference between the gross weight of said at least one dosing device (7, 8) before and after the output of additive materials, so as to record the amount of additive materials consumed during the inerting and verify that the formula for the inerting dough is respected and that it is properly arranged the mixture of inert material.

10. Process according to claim 7, **characterized in that** said at least one container (2, 2') comprises two hoppers in succession along the line of movement (10): a first hopper (2) and a second hopper (2'), respectively interconnected to a first cochlea (5) and a second cochlea (5') for the crushing of the portions of sludge to be treated, said first hopper (2) and said second hopper (2') being used in sequence in such a way that in the meantime that said first hopper (2) is emptied for the extraction of successive portions of sludge, said second hopper (2') is filled, and vice versa, in order to have a continuous operation of the system.
